# EUROPÄISCHE PATENTSCHRIFT

(11) **EP 1 640 524 B1**
(45) Veröffentlichungstag und Bekanntmachung des Hinweises auf die Patenterteilung: **09.03.2016**
(21) Anmeldenummer: 05019968.6
(22) Anmeldetag: 14.09.2005
(51) Int. Cl.: E04C 3/04, E04C 3/07, E04B 1/24, E04B 1/58, E04B 1/38, F16B 7/18, F16B 12/52, F16B 37/00

(54) **Baukasten zum Erstellen einer Halterung insbesondere für Rohrleitungen**
Construction kit for realizing a supporting structure, particularly for tubes.
Kit de construction pour réaliser une structure de support, en particulier pour tubes

(30) Priorität: 23.09.2004 DE 202004014808 U
(43) Veröffentlichungstag der Anmeldung: 29.03.2006
(73) Patentinhaber: Sikla Holding GmbH, 4614 Marchtrenk (AT)
(72) Erfinder: Warkus, Clemens, D-78628 Rottweil (DE)
(74) Vertreter: Kunst, Manuel Nikolaus Johannes

(56) Entgegenhaltungen:
- EP-A- 1 338 716
- CH-A- 661 818
- FR-A- 1 471 179
- US-A- 4 093 167
- US-A- 4 347 015
- US-A- 4 720 957
- US-A- 5 715 642

## Beschreibung

Die Erfindung betrifft einen Baukasten zum Erstellen einer Halterung, insbesondere für Rohrleitungen, mit mindestens einem als Hohlraumprofil ausgestalteten Grundelement und mit Befestigungsschrauben zum Befestigen zumindest eines anderen Grundelementes und/oder Zubehörteiles, wobei das Grundelement an zumindest einer Längsseite in einem Rastermaß voneinander beabstandete gewindelose Befestigungslöcher zum Befestigen wenigstens eines anderen Grundelements und/oder Zubehörteiles aufweist, und wobei die Befestigungsschrauben zum Befestigen zumindest eines anderen Grundelementes und/oder Zubehörteiles mit den Befestigungslöchern zusammenwirken und gewindefurchend oder gewindeschneidend ausgestaltet sind.

Im Anlagenbau besteht häufig das Problem, komplexe Rohrleitungssysteme an Gebäudeträgern derart befestigen zu können, dass die Rohrleitungen möglichst flexibel gehalten sind und bei Bedarf, gegebenenfalls auch unter Anpassung der benötigten Rohrhalterungen, verlegt werden können.

Aus der DE 298 00 185 U1 ist bereits ein Baukasten bekannt, dessen Grundelement durch ein als Doppel-T-Träger ausgestaltetes Profil gebildet wird. Dieses als Doppel-T-Träger ausgestaltete Grundelement ist im Verhältnis von Biegesteifigkeit zu Eigengewicht für eine Belastungsrichtung optimiert. Für andere Belästungsrichtungen ist dieses Verhältnis jedoch nicht optimal. Auch ist ein Doppel-T-Träger relativ weich bei Torsionsbeanspruchung.

Demgegenüber hat ein Hohlprofil mit geschlossenen Kantenflächen ausgeglichenere Festigkeitswerte in bezug auf die Belastungsrichtungen und eine höhere Torsionssteifigkeit.

Solche Hohlraumprofile sind zum Beispiel aus der GB 2, 235, 712 A oder aus der EP 1 338 716 A1 bekannt. Diese Hohlraumprofile sind mit Ausnehmungen, zum Beispiel mit Löchern versehen. Bei der GB 2,235,712 A ist das Profil ein sogenannter Sturz, auf den oben Mauersteine aufgemauert werden können; die an diesem Sturz seitlich und unten vorgesehenen Löcher sollen dem Verputz einen besseren Halt bieten. Bei der EP 1 338 716 A1 können mit Hilfe der Löcher Konstruktionsteile am Profil befestigt werden. Weil der Zugang zum Profilinneren sehr erschwert ist und insbesondere Gegenmuttern kaum vernünftig plazierbar sind, werden die Befestigungsschrauben durch das ganze Profil hindurchgesteckt und erst auf der Gegenseite mit einer Mutter festgezogen.

Gelochte Hohlraumprofile sind auch aus dem Regalbau bekannt. Hier werden jedoch die Teile in der Regel nicht verschraubt, sondern sie werden mittels Steckmontage miteinander verbunden.

Aus der US 4 720 957 A ist bereits ein Baukasten gemäß dem Oberbegriff des Anspruchs 1 bekannt, der zum Erstellen einer Halterung oder einer Rahmenkonstruktion bestimmt ist, die ein Gebäude tragen kann. Der vorbekannte Baukasten hat ein Grundelement, das aus einem Hohlraum-Profil hergestellt ist. Das als Grundelement dienende Hohlraum-Profil weist an seinen Längsseiten gewindelose Befestigungslöcher auf, die in einem Rastermaß voneinander beabstandet sind. Diese Befestigungslöcher sind zum Befestigen wenigstens eines anderen Grundelements und/oder eines Zubehörteiles bestimmt. Um die Grundelemente miteinander oder mit einem Zubehörteil verbinden zu können, sind gewindefurchende oder gewindeschneidende Befestigungsschrauben vorgesehen, die mit den Befestigungslöchern zusammenwirken. Diese Befestigungsschrauben können allerdings in jedes der miteinander verbundenen Bestandteile des vorbekannten Baukastens nur ein Gewinde schneiden, dessen axiale Erstreckung der Materialdicke des beispielsweise für das Grundelement verwendeten Materials entspricht.

Es besteht daher die Aufgabe, einen Baukasten der eingangs erwähnten Art zu schaffen, aus dem sich kostengünstig und mit geringem Aufwand eine flexible und belastbare Halterung auch für schwere Rohrleitungssysteme erstellen lässt.

Die erfindungsgemäße Lösung dieser Aufgabe besteht bei dem Baukasten der eingangs erwähnten Art insbesondere darin, dass das: Grundelement als Vierkant-Hohlraumprofil ausgestaltet ist, dass an den Profil-Längsseiten beidseits jedes Eckbereiches jeweils zumindest eine Lochreihe von Befestigungslöchern vorgesehen ist, dass die zumindest eine an den Profil-Längsseiten vorgesehene Lochreihe jeweils in einer Profil-Sicke angeordnet ist, und dass die Profil-Sicken, die in den Profil-Sicken befindlichen Befestigungslöcher und die Befestigungsschrauben derart aufeinander abgestimmt sind, dass die Befestigungsschrauben ihr Gewinde in die Befestigungslöcher und die Seitenwände der Pröfil-Sicken furchen oder schneiden.

Bei dem erfindungsgemäßen Baukasten dient ein gelochtes Vierkant-Hohlraumprofil als Grundelement. Entlang seiner Längserstreckung weist es viele Befestigungsstellen zum Anbringen von Zusatzelementen oder weiteren Grundelementen auf. Dazu ist am den Profil-Längsseiten beidseits jedes Eckbereiches jeweils zumindest eine Lochreihe von Befestigungslöchern vorgesehen. Die Verbindung wird mittels gewindefurchender oder:gewindeformender Schrauben realisiert, die beispielsweise als Taptite-Schrauben bekannt sind. Durch die Verwendung von gewindefurchenden oder gewindeformenden Schrauben können die Löcher der Befestigungsstellen vorerst ohne Gewinde gefertigt werden. Die Löcher können zum Beispiel durch Stanzen vor dem Profilieren des Hohlraumprofiles gefertigt werden. Die Gewinde werden bei der Montage nur dort erzeugt, wo sie auch benötigt werden. Erfindungsgemäß ist die zumindest eine, an den Profil-Längsseiten vorgesehene Lochreihe jeweils in einer Profil-Sicke angeordnet. Dabei sind die in den Profil-Sicken befindlichen Befestigungslöcher, die Profil-Sicken sowie die Befestigungsschrauben derart aufeinander abgestimmt, dass die Befestigungsschrauben ihr Gewinde in die Befestigungslöcher und die Seitenwände der Profil-Sicken furchen oder schneiden. Dadurch wird mit der Profil-Sicke mehr Gewindefläche und damit eine höhere Festigkeit der Schraubverbindung erreicht und das Gewinde auch in den Bereich des "Sickenschenkels" gelegt.

Das Schaffen von vielen, in Rastern angeordneten Befestigungsstellen hat den Vorteil, dass die Position der Befestigungslöcher bereits gegeben ist. Wären die Befestigungslöcher nicht bereits vor der Montage produziert worden, so müssten sie zuerst mühsam bei der Montage ausgemessen und dann gebohrt werden, beziehungsweise es wären selbstbohrende Befestigungsschrauben erforderlich. Besonders bei dickeren Profilstärken des verwendeten Hohlraumprofiles ist der Einsatz von selbstbohrenden Befestigungsschrauben aber sehr aufwändig, beziehungsweise nicht mehr machbar.

Im Vergleich zu einer C-förmigen Montageschiene, wo Verbindungsteile kraftschlüssig an der Schienenöffnung montiert werden, hat das Festschrauben in einem Befestigungsloch des Hohlraumprofiles den Vorteil, dass formschlüssige Verbindungen erreicht werden können. Sollte zum Beispiel bei einer Belastung quer zur Schraubenachse ein Zubehörteil ins Rutschen kommen, so wird die Bewegung nach einigen Millimetern gestoppt, sobald die Befestigungsschraube am Lochrand des Zubehörteils ansteht. Das Analoge gilt, wenn die Befestigungsschraube ein Loch im Hohlraumprofil durchsetzt und in das Zubehörteil eingeschraubt wird. Solche formschlüssigen Verbindungen, wie sie bei dem erfindungsgemäßen Baukasten vorgesehen sind, bieten eine hohe Sicherheit.

Um an allen Seiten des Grundelementes gleiche Befestigungsmöglichkeiten zu schaffen, sieht eine bevorzugte Weiterbildung gemäß der Erfindung vor, dass das Grundelement als im Querschnitt quadratisches Vierkant-Hohlraumprofil ausgestaltet ist.

Das als Vierkantprofil ausgestaltete Grundelement hat somit auf jeder Seite im Bereich der Eckkanten je zwei Reichen von runden Befestigungslöchern. Diese Befestigungslöcher sind regelmäßig in einem Raster angeordnet, z.B. Rastermaß 20mm. Sie dienen dem Befestigen verschiedener Zubehörteile, mit welchen zum Beispiel mehrere Grundelemente miteinander verbunden werden können. Die Zubehörteile werden mit gewindeformenden Befestigungsschrauben an das Grundelement geschraubt, welche Befestigungsschrauben in die runden Befestigungslöcher eingeschraubt werden. Die Befestigungslöcher sind entsprechend dem zu verwendenden Schraubentyp dimensioniert.

Eine besonders vorteilhafte Weiterbildung gemäß der Erfindung sieht vor, dass die Befestigungslöcher der beidseits in einem Profil-Eckbereich beziehungsweise auf einer Profil-Längsseite vorgesehenen Lochreihen ein halbes Rastermaß versetzt zueinander angeordnet sind. So können die Lochreihen einer Profil-Längsseite gegeneinander versetzt angeordnet sein, z.B. um die Hälfte des Rastermaßes. Der Versatz verhindert bei gleichzeitiger Nutzung von zwei angrenzenden Profilseiten an gleicher Profil-Längserstreckungsstelle eine Kollision von nach innen ragenden Befestigungsschrauben. Dazu müssen Versatz und Schraubendurchmesser entsprechend dimensioniert werden, z.B. bei Versatz um die Hälfte des Rastermaßes muß der Schraubendurchmesser kleiner als die Hälfte des Rastermaßes sein.

Um weitere Befestigungsmöglichkeiten zu bieten, ist es vorteilhaft, wenn zumindest an einer der Längsseiten des Grundelements eine etwa in der Seitenmitte angeordnete Lochreihe vorgesehen ist. Vorzugsweise ist an allen Längsseiten des Grundelements jeweils etwa in der Seitenmitte eine Lochreihe vorgesehen. Bevorzugte Ausführungen sehen dabei vor, dass die in der Seitenmitte zumindest einer Längsseite vorgesehene Lochreihe sich abwechselnde Rundlöcher und Langlöcher hat, beziehungsweise, dass die Rundlöcher als Befestigungslöcher ausgebildet sind und dass die Langlöcher einen im Vergleich zu den Befestigungsschrauben größeren lichten Querschnitt haben.

Auch die auf zumindest einer und vorzugsweise auf jeder Seite im Bereich der Seitenmitte vorgesehenen Lochreihen sollten in einem Raster angeordnet sein, wobei sich Rundlöcher und Langlöcher abwechseln. An den runden Löchern können mittels gewindeformender Befestigungsschrauben Zubehörteile und andere Bestandteile des erfindungsgemäßen Baukastens befestigt werden. Sind diese Zubehörteile beispielsweise als Montageschienen oder Auslegerkonsolen ausgebildet, können daran beispielsweise Rohrschellen befestigt werden.

Die Langlöcher in der Profil-Seitenmitte sind demgegenüber vorgesehen, um auch im Inneren des als Hohlraumprofil ausgestalteten Grundelementes Zubehörteile und andere Bestandteile des erfindungsgemäßen Baukastens befestigen zu können.

Eine bevorzugte Weiterbildung gemäß der Erfindung sieht vor, dass zumindest ein Zubehörteil mittels einer Befestigungsplatte oder eines Befestigungssteges an einer Längsseite eines Grundelements flachseitig anliegend anschraubbar ist. Dabei ist es besonders vorteilhaft, wenn die zumindest eine Befestigungsplatte oder der wenigstens eine Befestigungssteg des mindestens einen Zubehörteiles zu den Profil-Sicken des Grundelementes komplementäre Gegensicken hat. Die Längssicken am Grundelement erhöhen nicht nur dessen Biegesteifigkeit. Bei entsprechender Gestaltung der Befestigungsplatte oder des Befestigungssteges mit Gegensicken kann erreicht werden, dass die Profil-Sicken und die dazu komplementär geformten Gegensicken als Führung für das Zubehörteil bei der Montage dienen. Auch wird damit ein Formschluss erreicht, welcher ein Verdrehen der an einem Zubehörteil vorgesehenen Befestigungsplatte oder des Befestigungssteges gegenüber dem Grundelement verhindert.

Besonders vorteilhaft ist es, wenn an der Befestigungsplatte oder dem Befestigungssteg zumindest vier Durchstecklöcher vorgesehen sind, von denen wenigstens zwei in einer Diagonale zueinander angeordnete Durchstecklöcher mit Befestigungslöchern des Grundelementes fluchten. Durch den Versatz der an einer Profil-Längsseite vorgesehenen Lochreihen um die Hälfte des Rastermaßes einer Lochreihe lassen sich Zubehörteile und andere Bestandteile des erfindungsgemäßen Baukastens am Grundelement in einer kleineren Abstufung als das Rastermaß anbringen. Dazu kann die Befestigungsplatte oder der Befestigungssteg vier Durchstecklöcher haben, welche beispielsweise an den Ecken eines Rechtecks angeordnet sind. Eine erste Befestigungsmöglichkeit ergibt sich bei Verwendung zweier diagonal gegenüberliegender Löcher, - die nächste Möglichkeit ergibt sich, wenn die beiden Löcher der anderen Diagonale genutzt werden. So kann also durch den Versatz der zweiten Lochreihe bei gegebener Abstufung der Befestigungsmöglichkeiten für ein Zubehörteil ein größeres Rastermaß für die Befestigungslöcher im Hohlraumprofil gewählt werden und es müssen weniger Löcher gefertigt werden.

Besonders vorteilhaft ist es, wenn der Baukasten Universalhalter, Auslegerkonsolen und/oder L-förmige Verbindungswinkel als Zubehörteile hat.

So sieht eine Ausführungsform gemäß der Erfindung vor, dass der Verbindungswinkel zwei L-förmig miteinander verbundene Befestigungsstege aufweist. Mit Hilfe dieser L-förmigen Verbindungswinkel können beispielsweise mehrere Grundelemente miteinander verbunden werden. Diese L-förmigen Verbindungswinkel können auch mit Langlöchern versehen sein, so dass die Anordnung der Grundelemente zueinander trotz dem Lochraster stufenlos erfolgen kann.

Eine weitere Ausführungsform gemäß der Erfindung sieht vor, dass der Universalhalter ein Achtkantprofil aufweist, das an das lichte Innenmaß des Grundelementes formangepasst und mit einem freien Profilende stirnseitig in das Grundelement einsetzbar ist. Dieser Universalhalter wird stirnseitig in das als Vierkantprofil ausgestaltete Grundelement eingeführt. Universalhalter und Vierkantprofil werden mittels gewindeformender Schrauben miteinander verschraubt. Dabei sind im Achtkantprofil des Universalhalters Befestigungslöcher vorgesehen, in welche die gewindefurchenden oder gewindeschneidenden Befestigungsschrauben einschraubbar sind. Die Langlöcher im Grundelement müssen breiter als der Schraubendurchmesser sein. Bei entsprechender Abstufung des am Achtkantprofil vorgesehenen Rastermaßes und der Länge des Langloches können Vierkantprofil und Universalhalter stufenlos im Abstand zueinander angeordnet sein.

Anstelle des Achtkantprofils kann der Universalhalter auch aus einem Profil mit einem anderen Profil-Querschnitt gebildet werden, zum Beispiel ein quadratischer Querschnitt. Das Achtkantprofil hat demgegenüber den Vorteil, dass Universalhalter und Vierkantprofil im Raster von 45° verdreht zueinander angeordnet werden können.

Mit Hilfe eines als Achtkantprofil ausgestalteten Universalhalters, der an seinen beiden gegenüberliegenden freien Enden jeweils stirnseitig in ein Grundelement einsetzbar ist, können zwei Grundelemente in Längsrichtung miteinander verbunden werden.

Besonders vorteilhaft ist es jedoch, wenn der Baukasten zumindest einen Universalhalter hat, der an seinem, dem freien Profilende abgewandten Stirnende mit einer Befestigungsplatte oder einem Befestigungssteg vorzugsweise rechtwinklig verbunden ist. Ein solcher, mit einer Befestigungsplatte oder einem Befestigungssteg verbundener Universalhalter kann beispielsweise verwendet werden, um das als Vierkantprofil ausgestaltete Grundelement am Baukörper, also zum Beispiel an der Decke, am Boden oder an einer Wand oder an einem anderen Grundelement zu befestigen.

Weitere Merkmale der Erfindung ergeben sich aus er folgenden Beschreibung erfindungsgemäßer Ausführungsbeispiele in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: ein als Vierkantprofil ausgestaltetes Grundelement in einer perspektivischen Darstellung, das Bestandteil eines Baukastens zum Erstellen einer Halterung, insbesondere für Rohrleitungen, ist,
- Fig. 2: das Grundelement aus Fig.1 in einer Querschnittsdarstellung,
- Fig. 3: das Grundelement in dem in Fig.2 umrahmten Teilbereich, wobei das Grundelement über eine Befestigungsschraube mit einem beispielsweise als L-förmiger Verbindungswinkel ausgestalteten Zubehörteil verbunden ist, und
- Fig. 4: eine aus mehreren Grundelementen und verschiedenen Zubehörteilen erstellte Rohrhalterung in einer Explosionsdarstellung.

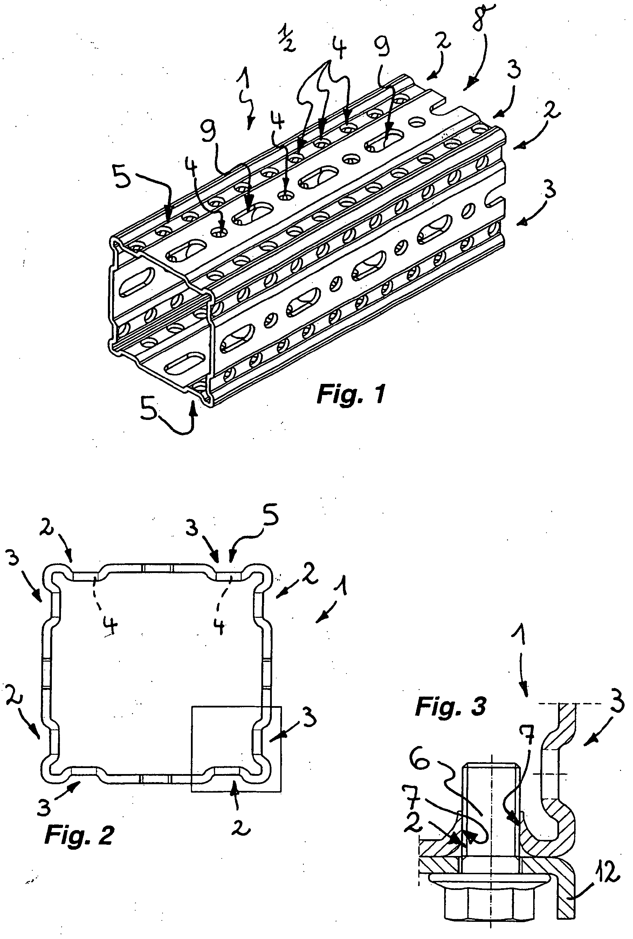

In den Figuren 1 bis 3 ist ein Grundelement 1 dargestellt, das Bestandteil eines Baukastens zum Erstellen einer Halterung, insbesondere für Rohrleitungen, ist. Das Grundelement 1 ist als Hohlraumprofil und insbesondere als ein im Querschnitt quadratisches Vierkant-Hohlraumprofil ausgestaltet.

Wie aus Fig.1 deutlich wird, ist an den Profil-Längsseiten des Grundelementes 1 beidseits jedes Eckbereiches jeweils eine Lochreihe 2, 3 von Befestigungslöchern 4 vorgesehen. Aus einem Vergleich der Fig.1 bis 3 ist erkennbar, dass die an den Profillängsseiten vorgesehenen Lochreihen 2, 3 jeweils in einer Profil-Sicke 5 angeordnet sind.

Die Befestigungslöcher 4 bilden Befestigungsstellen zum Verbinden von Zubehörteilen oder anderen Bestandteilen des Baukastens am Grundelement 1. Da die Befestigungslöcher 4 gewindelos sind, werden gewindefurchende oder gewindeschneidende Befestigungsschrauben 6 zum Befestigen der Zubehörteile oder dergleichen verwendet. Dabei sind die Profil-Sicken 5, die in den Profil-Sicken 5 befindlichen Befestigungslöcher 4 und die Befestigungsschrauben 6 derart aufeinander abgestimmt, dass die Befestigungsschrauben 6 ihr Gewinde in die Befestigungslöcher 4 und die Seitenwände 7 der Profil-Sicken 5 schneiden.

Bei genauer Betrachtung insbesondere der Fig.1 wird deutlich, dass die Befestigungslöcher 4 der beidseits an jeder Profil-Längsseite vorgesehenen Lochreihen 2, 3 um ein halbes Rastermaß versetzt zueinander angeordnet sind. Dabei sei angemerkt, dass in den Querschnittsdarstellungen gemäß den Fig.2 und 3 die Lochreihen 2, 3 zum besseren Verständnis ohne Versatz dargestellt wurden.

An allen Längsseiten des Grundelements 1 ist jeweils etwa in der Seitenmitte eine weitere Lochreihe 8 vorgesehen, die sich abwechselnde Rundlöcher und Langlöcher 9 hat. Während die Rundlöcher als Befestigungslöcher 4 ausgebildet sind, weisen die Langlöcher 9 einen im Vergleich zu den Befestigungsschrauben 6 größeren lichten Querschnitt auf und dienen somit als Durchstecklöcher für die Befestigungsschrauben 6.

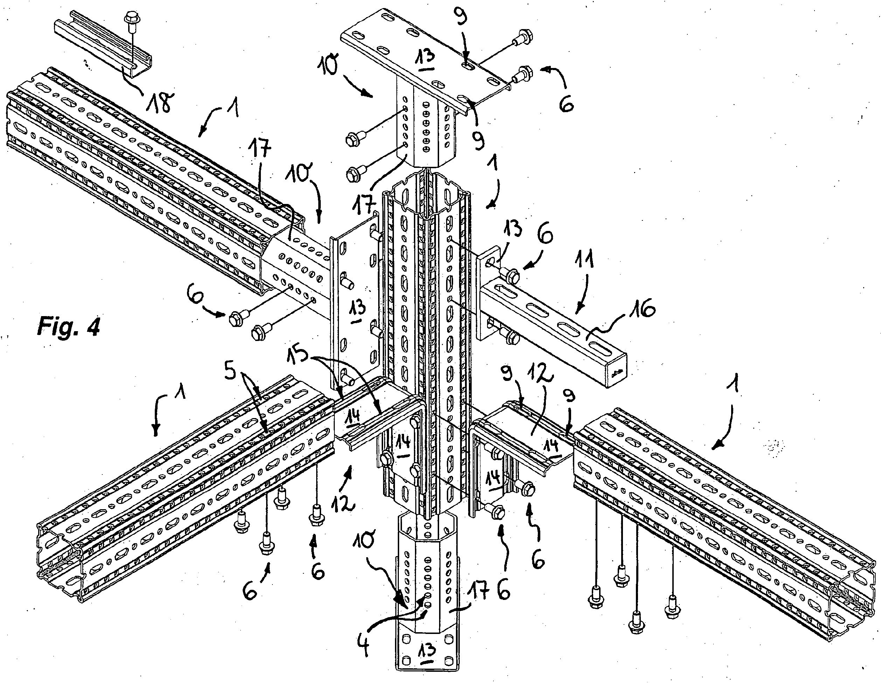

In Fig.4 ist eine Halterung insbesondere für Rohrleitungen dargestellt, die aus mehreren Grundelementen 1, Zubehörteilen und sonstigen Bestandteilen des Baukastens erstellt wurde. Wie aus Fig.4 deutlich wird, sind die Zubehörteile als Universalhalter 10, Auslegerkonsole 11 oder L-förmiger Verbindungswinkel 12 ausgestaltet.

Die Zubehörteile 10, 11, 12 weisen zumindest eine Befestigungsplatte 13 oder wenigstens einen Befestigungssteg 14 auf. Der L-förmige Verbindungswinkel 12 weist sogar zwei, etwa rechtwinklig miteinander verbundene Befestigungsstege 14 auf. An den Befestigungsstegen 14 des L-förmigen Verbindungswinkels 12 sind zu den Profil-Sicken 5 des Grundelementes 1 komplementäre Gegensicken 15 vorgesehen. Die ineinandergreifenen Profil-Sicken 5 und Gegensicken 15 dienen zur Führung des Verbindungswinkels 12 an dem angrenzenden Grundelement 1.

Mit Hilfe eines Verbindungswinkels 12 können zwei Grundelemente 1 etwa im rechten Winkel zueinander verbunden werden. Dazu sind an den Befestigungsstegen 14 des Verbindungswinkels 12 Langlöcher 9 vorgesehen. Durch die am Verbindungswinkel 12 vorgesehenen Langlöcher können Befestigungsschrauben 6 durchgesteckt und jeweils in ein Befestigungsloch 4 eines benachbarten Grundelementes 1 eingeschraubt werden.

Das als Auslegerkonsole 11 ausgestattete Zubehörteil weist einen gelochten Profilstab oder auch eine C-Schiene 16 auf, an dem beispielsweise - hier nicht weiter dargestellte - Rohrschellen befestigt werden können und der stirnseitig im rechten Winkel mit einer Befestigungsplatte 13 verbunden ist.

Die als Universalhalter 10 dienenden Zubehörteile haben ein Achtkantprofil 17. Während das eine Stirnende des Achtkantprofils 17 mit einer Befestigungsplatte 13 verbunden ist, kann das freie andere Profilende des Achtkantprofils 17 in den Vierkant-Hohlraum des Grundelementes 1 stirnseitig eingesetzt werden. Der Universalhalter 10 und das Grundelement 1 werden mittels gewindeformender Befestigungsschrauben 6 miteinander verschraubt. Dabei sind die runden Befestigungslöcher 4 in den Profil-Längsseiten des Achtkantprofils 17 entsprechend dem zu verwendenden Schraubentyp dimensioniert. Die Langlöcher 9 im Grundelement 1 sind demgegenüber breiter als der Schraubendurchmesser ausgebildet. Bei entsprechender Abstimmung des am Achtkantprofil 17 vorgesehenen Rastermaßes und der Länge des Langloches 9 können Grundelement 1 und Universalhalter 10 stufenlos im Abstand zueinander angeordnet sein. Das Achtkantprofil 17 des Universalhalters 10 hat den Vorteil, dass der Universalhalter 10 und das als Vierkantprofil ausgestaltete Grundelement 1 im Raster von 45° verdreht zueinander angeordnet werden können.

Wie aus Fig.4 auch deutlich wird, können an den Profil-Längsseiten der Grundelemente 1 auch C-förmige Montageschienen 18 üblicher Bauart befestigt werden.

## Patentansprüche

1. Baukasten zum Erstellen einer Halterung, insbesondere für Rohrleitungen, mit mindestens einem als Hohlraumprofil ausgestalteten Grundelement (1) und mit Befestigungsschrauben (6) zum Befestigen zumindest eines anderen Grundelementes (1) und/oder Zubehörteiles, wobei das Grundelement (1) an zumindest einer Längsseite in einem Rastermaß voneinander beabstandete gewindelose Befestigungslöcher (4) zum Befestigen wenigstens eines anderen Grundelements (1) und/oder Zubehörteiles aufweist, und wobei die Befestigungsschrauben (6) zum Befestigen zumindest eines anderen Grundelementes (1) und/oder Zubehörteiles mit den Befestigungslöchern (4) zusammenwirken und gewindefurchend oder gewindeschneidend ausgestaltet sind, **dadurch gekennzeichnet, dass** das Grundelement (1) als Vierkant-Hohlraumprofil ausgestaltet ist, dass an den Profil-Längsseiten beidseits jedes Eckbereiches jeweils zumindest eine Lochreihe (2, 3) von Befestigungslöchern (4) vorgesehen ist, dass die zumindest eine an den Profil-Längsseiten vorgesehene Lochreihe (2, 3) jeweils in einer Profil-Sicke (5) angeordnet ist, und dass die Profil-Sicken (5), die in den Profil-Sicken (5) befindlichen Befestigungslöcher (4) und die Befestigungsschrauben (6) derart aufeinander abgestimmt sind, dass die Befestigungsschrauben (6) ihr Gewinde in die Befestigungslöcher (4) und die Seitenwände (7) der Profil-Sicken (5) furchen oder schneiden.

2. Baukasten nach Anspruch 1, **dadurch gekennzeichnet, dass** das Grundelement (1) als im Querschnitt quadratisches Vierkant-Hohlraumprofil ausgestaltet ist.

3. Baukasten nach Anspruch 1 oder 2, **dadurch gekennzeichnet, dass** die Befestigungslöcher (4) der beidseits in einem Profil-Eckbereich beziehungsweise auf einer Profil-Längsseite vorgesehenen Lochreihen (2, 3) um ein halbes Rastermaß versetzt zueinander angeordnet sind.

4. Baukasten nach einem der Ansprüche 1 bis 3, **dadurch gekennzeichnet, dass** zumindest an einer der Längsseiten des Grundelementes (1) eine etwa in der Seitenmitte angeordnete Lochreihe (8) vorgesehen ist.

5. Baukasten nach Anspruch 4, **dadurch gekennzeichnet, dass** an allen Längsseiten des Grundelements (1) jeweils etwa in der Seitenmitte eine Lochreihe (8) vorgesehen ist.

6. Baukasten nach Anspruch 4 oder 5, **dadurch gekennzeichnet, dass** die in der Seitenmitte zumindest einer Längsseite vorgesehene Lochreihe (8) sich abwechselnde Rundlöcher und Langlöcher (9) hat.

7. Baukasten nach Anspruch 6, **dadurch gekennzeichnet, dass** die Rundlöcher als Befestigungslöcher (4) ausgebildet sind und dass die Langlöcher (9) einen im Vergleich zu den Befestigungsschrauben (6) größeren lichten Querschnitt haben.

8. Baukasten nach einem der Ansprüche 1 bis 7, **dadurch gekennzeichnet, dass** zumindest ein Zubehörteil mittels einer Befestigungsplatte (13) oder eines Befestigungssteges (14) an einer Längsseite eines Grundelementes (1) flachseitig anliegend anschraubbar ist.

9. Baukasten nach Anspruch 8, dass die zumindest eine Befestigungsplatte (13) oder der wenigstens eine Befestigungssteg (14) des mindestens einen Zubehörteiles zu den Profil-Sicken (5) des Grundelementes (1) komplementäre Gegensicken (15) hat.

10. Baukasten nach Anspruch 8 oder 9, **dadurch gekennzeichnet, dass** an der Befestigungsplatte (13) oder dem Befestigungssteg (14) zumindest vier Durchstecklöcher vorgesehen sind, von denen wenigstens zwei in einer Diagonale zueinander angeordnete Durchstecklöcher mit Befestigungslöchern (4) des Grundelementes (1) fluchten.

11. Baukasten nach einem der Ansprüche 1 bis 10, **dadurch gekennzeichnet, dass** der Baukasten Universalhalter (10), Auslegerkonsolen (11) und/oder L-förmige Verbindungswinkel (12) als Zubehörteile hat.

12. Baukasten nach Anspruch 11, **dadurch gekennzeichnet, dass** die Verbindungswinkel (12) zwei L-förmig miteinander verbundene Befestigungsstege (14) aufweist.

13. Baukasten nach Anspruch 11 oder 12 **dadurch gekennzeichnet, dass** der Universalhalter (10) ein Achtkantprofil (17) aufweist, das an das lichte Innenmaß des Grundelements (1) formangepasst und mit einem freien Profilende stirnseitig in das Grundelement (1) einsetzbar ist.

14. Baukasten nach einem der Ansprüche 11 bis 13, **dadurch gekennzeichnet, dass** der Baukasten zumindest einen Universalhalter (10) hat, der an seinem, dem freien Profilende abgewandten Stirnende mit einer Befestigungsplatte (13) oder einem Befestigungssteg (14) vorzugsweise rechtwinklig verbunden ist.

## Claims

1. Construction kit for producing a mounting, in particular for pipes, having at least one basic element (1), formed as a hollow profile, and having fastening screws (6) for fastening at least one other basic element (1) and/or accessory part, wherein the basic element (1), on at least one long side, comprises unthreaded fastening holes (4), mutually spaced by a modular dimension, for fastening at least one other basic element (1) and/or accessory part, and wherein the fastening screws (6) cooperate with the fastening holes (4) in order to fasten at least one other basic element (1) and/or accessory part and are designed in a thread-forming or thread-cutting manner, **characterised in that** the basic element (1) is formed as a square hollow profile, that on the profile long sides on both sides of each corner region in each case at least one row (2, 3) of fastening holes (4) is provided, that the at least one row of holes (2, 3) provided on the profile long sides is disposed in each case in a profile bead (5), and that the profile beads (5), the fastening holes (4), which are located in the profile beads (5), and the fastening screws (6) are matched to one another in such a way that the fastening screws (6) form or cut their thread into the fastening holes (4) and the side walls (7) of the profile beads (5).

2. Construction kit as claimed in claim 1, **characterised in that** the basic element (1) is formed as a square hollow profile with a quadratic cross-section.

3. Construction kit as claimed in claim 1 or 2, **characterised in that** the fastening holes (4) of the rows of holes (2, 3), provided on both sides in a profile corner region or on a profile long side, are disposed offset with respect to one another by half the modular dimension.

4. Construction kit as claimed in any one of claims 1 to 3, **characterised in that**, at least on one of the long sides of the basic element (1), a row of holes (8) disposed approximately in the middle of the side is provided.

5. Construction kit as claimed in claim 4, **characterised in that** a row of holes (8) is provided on all long sides of the basic element (1) in each case approximately in the middle of the side.

6. Construction kit as claimed in claim 4 or 5, **characterised in that** the row of holes (8) provided in the middle of at least one long side has alternating round holes and elongate holes (9).

7. Construction kit as claimed in claim 6, **characterised in that** the round holes are formed as fastening holes (4) and that the elongate holes (9) have a larger clear cross-section compared with the fastening screws (6).

8. Construction kit as claimed in any one of claims 1 to 7, **characterised in that** at least one accessory part can be screwed by means of a fastening plate (13) or a fastening web (14) to a long side of a basic element (1) with flat sides lying against one another.

9. Construction kit as claimed in claim 8, **characterised in that** the at least one fastening plate (13) or the at least one fastening web (14) of the at least one accessory part has counterpart beads (15) complementary to the profile beads (5) of the basic element (1).

10. Construction kit as claimed in claim 8 or 9, **characterised in that** at least four through holes are provided on the fastening plate (13) or the fastening web (14), of which through holes at least two through holes, disposed on a diagonal with one another, lie flush with fastening holes (4) of the basic element (1).

11. Construction kit as claimed in any one of claims 1 to 10, **characterised in that** the construction kit has universal holders (10), cantilevered brackets (11) and/or L-shaped connecting angle brackets (12) as accessory parts.

12. Construction kit as claimed in claim 11, **characterised in that** the connecting angle bracket (12) has two L-shaped mutually connected fastening webs (14).

13. Construction kit as claimed in claim 11 or 12, **characterised in that** the universal holder (10) has an octagonal profile (17) which is conformed to the inside width of the basic element (1) and can be inserted with a free profile end at the end face into the basic element (1).

14. Construction kit as claimed in any one of claims 11 to 13, **characterised in that** the construction kit has at least one universal holder (10) which at its end face facing away from the free profile end, is connected to a fastening plate (13) or a fastening web (14), preferably at a right angle.

## Revendications

1. Kit de construction pour réaliser un support de fixation, en particulier pour des conduites, avec au moins un élément de base (1) en forme de profilé creux et avec des vis de fixation (6) pour la fixation d'au moins un autre élément de base (1) et/ou d'une partie d'accessoire, dans lequel l'élément de base (1) présente sur au moins un côté longitudinal des trous de fixation (4) non filetés espacés l'un de l'autre d'une dimension modulaire pour la fixation d'au moins un autre élément de base (1) et/ou d'une partie d'accessoire et dans lequel les vis de fixation (6) coopèrent avec les trous de fixation (4) pour la fixation d'au moins un autre élément de base (1) et/ou d'une partie d'accessoire et sont réalisées de façon à tracer un filet ou à tailler un filet, **caractérisé en ce que** l'élément de base (1) est un profilé creux à quatre côtés, **en ce qu'**il est prévu au moins une série de trous (2, 3) de trous de fixation (4) sur chacun des côtés longitudinaux du profilé de part et d'autre de chaque région d'angle, **en ce que** ladite au moins une série de trous (2, 3) prévue sur les côtés longitudinaux du profilé est disposée dans une moulure (5) du profilé et **en ce que** les moulures (5) du profilé, les trous de fixation (4) se trouvant dans les moulures (5) du profilé et les vis de fixation (6) sont agencés les uns par rapport aux autres, de telle manière que les vis de fixation (6) tracent ou taillent leur filet dans les trous de fixation (4) et dans les parois latérales (7) des moulures (5) du profilé.

2. Kit de construction selon la revendication 1, **caractérisé en ce que** l'élément de base (1) est formé par un profilé creux à quatre côtés à section transversale carrée.

3. Kit de construction selon la revendication 1 ou 2, **caractérisé en ce que** les trous de fixation (4) des séries de trous (2, 3) prévues de part et d'autre dans une région d'angle du profilé ou sur un côté longitudinal du profilé sont espacées l'une de l'autre avec un décalage de la moitié de la dimension modulaire.

4. Kit de construction selon l'une quelconque des revendications 1 à 3, **caractérisé en ce qu'**il est prévu une série de trous (8) disposée environ au milieu du côté au moins sur l'un des côtés longitudinaux de l'élément de base (1).

5. Kit de construction selon la revendication 4, **caractérisé en ce qu'**il est prévu chaque fois une série de trous (8) environ au milieu du côté sur tous les côtés longitudinaux de l'élément de base (1).

6. Kit de construction selon la revendication 4 ou 5, **caractérisé en ce que** la série de trous (8) prévue au milieu du côté d'au moins un côté longitudinal comporte en alternance des trous ronds et des trous oblongs (9).

7. Kit de construction selon la revendication 6, **caractérisé en ce que** les trous ronds sont réalisés comme trous de fixation (4) et **en ce que** les trous oblongs (9) ont une section transversale libre plus grande par rapport aux vis de fixation (6).

8. Kit de construction selon l'une quelconque des revendications 1 à 7, **caractérisé en ce qu'**au moins une partie d'accessoire peut être vissée en étant appliquée à plat sur un côté longitudinal de l'élément de base (1) au moyen d'une plaque de fixation (13) ou d'une patte de fixation (14).

9. Kit de construction selon la revendication 8, **caractérisé en ce que** ladite au moins une plaque de fixation (13) ou ladite au moins une patte de fixation (14) de ladite au moins une partie d'accessoire présente des contre-moulures (15) complémentaires aux moulures (5) du profilé de l'élément de base (1).

10. Kit de construction selon la revendication 8 ou 9, **caractérisé en ce qu'**il est prévu sur la plaque de fixation (13) ou sur la patte de fixation (14) au moins quatre trous de passage, dont au moins deux trous de passage disposés en diagonale l'un par rapport à l'autre sont alignés avec des trous de fixation (4) de l'élément de base (1).

11. Kit de construction selon l'une quelconque des revendications 1 à 10, **caractérisé en ce que** le kit de construction contient des supports universels (10), des consoles de soutien (11) et/ou des équerres d'assemblage en forme de L (12) comme parties d'accessoires.

12. Kit de construction selon la revendication 11, **caractérisé en ce que** l'équerre d'assemblage (12) présente deux pattes de fixation (14) reliées l'une à l'autre en forme de L.

13. Kit de construction selon la revendication 11 ou 12, **caractérisé en ce que** le support universel (10) présente un profilé à huit côtés (17) qui a une forme adaptée à la dimension intérieure libre de l'élément de base (1) et qui peut être inséré dans l'élément de base (1) frontalement avec une extrémité libre de profilé.

14. Kit de construction selon l'une des revendications 11 à 13, **caractérisé en ce que** le kit de construction comprend au moins un support universel (10) qui est assemblé à son extrémité frontale opposée à l'extrémité libre du profilé, de préférence à angle droit, à une plaque de fixation (13) ou à une patte de fixation (14).
